(19) Europäisches Patentamt
European Patent Office
Office européen des brevets

(11) **EP 4 730 768 A1**

(12) **EUROPEAN PATENT APPLICATION**

(43) Date of publication:
**22.04.2026 Bulletin 2026/17**

(21) Application number: **24306731.1**

(22) Date of filing: **17.10.2024**

(51) International Patent Classification (IPC):
*H04N 19/105* (2014.01)    *H04N 19/11* (2014.01)
*H04N 19/13* (2014.01)    *H04N 19/157* (2014.01)
*H04N 19/159* (2014.01)    *H04N 19/174* (2014.01)
*H04N 19/176* (2014.01)    *H04N 19/463* (2014.01)
*H04N 19/593* (2014.01)    *H04N 19/70* (2014.01)
*H04N 19/91* (2014.01)

(52) Cooperative Patent Classification (CPC):
H04N 19/70; H04N 19/105; H04N 19/11;
H04N 19/13; H04N 19/157; H04N 19/159;
H04N 19/174; H04N 19/176; H04N 19/463;
H04N 19/593; H04N 19/91

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE LEANNEC, Fabrice
35830 BETTON (FR)**
• **NASER, Karam
35250 MOUAZE (FR)**
• **RATH, Gagan Bihari
35000 RENNES (FR)**
• **DUMAS, Thierry
35700 RENNES (FR)**

(74) Representative: **Vossius & Partner
Patentanwälte Rechtsanwälte mbB
Siebertstraße 3
81675 München (DE)**

(54) **INTRA TMP AND LIC COMBINATION**

(57)    Systems, methods, and instrumentalities are disclosed for using an intra template matching prediction (TMP) fractional mode and/or intraTMP-local illumination compensation (LIC) mode. For example, a device for video decoding may obtain, in video data (e.g., in a bitstream), an intraTMP-LIC mode activated (e.g., enabled) indication. The intraTMP-LIC mode activated (e.g., enabled) indication may be configured to indicate whether an intraTMP-LIC mode is activated (e.g., enabled) for a block. Based on the obtained intraTMP-LIC mode activated (e.g., enabled) indication, the device may obtain a context-adaptive binary arithmetic coding (CABAC) context for a fractional template matching indication associated with the block. The device may decode the fractional template matching indication associated with the block based on the CABAC context for the fractional template matching indication.

FIG. 15

EP 4 730 768 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for using an intra template matching prediction (TMP) fractional mode and/or intraTMP- local illumination compensation (LIC) mode. A context-adaptive binary arithmetic coding (CABAC) context for a fractional template matching indication associated with a block may be determined based on whether intraTMP-LIC mode is activated (e.g., enabled) for the block. The CABAC context for the fractional template matching indication associated with a block may be determined based on whether intraTMP-LIC mode is activated (e.g., enabled) for the block and whether intraTMP-LIC mode extension (e.g., the use of extended IntraTMP-LIC modes as described herein) is activated (e.g., enabled) for a slice associated with the block.

A device for video decoding may include a processor. The processor may be configured to perform one or more of the following.

In examples, the device for video decoding may obtain, in video data (e.g., in a bitstream), an intraTMP-LIC mode activated (e.g., enabled) indication. The intraTMP-LIC mode activated (e.g., enabled) indication may be configured to indicate whether intraTMP-LIC mode is activated (e.g., enabled) for a block. Based on the obtained intraTMP-LIC mode activated (e.g., enabled) indication, the device may obtain (e.g., determine, select, and/or the like) a CABAC context for a fractional template matching indication associated with the block. The device may decode the fractional template matching indication associated with the block based on the CABAC context for the fractional template matching indication.

In examples, based on the intraTMP-LIC mode activated (e.g., enabled) indication indicating that intraTMP-LIC mode is activated (e.g., enabled) for the block, the device may use a first CABAC context for decoding the fractional template matching indication associated with the block. Based on the intraTMP-LIC mode activated (e.g., enabled) indication indicating that intraTMP-LIC mode is deactivated (e.g., disabled) for the block, the device may use a second CABAC context for decoding the fractional template matching indication associated with the block.

In examples, the device may determine whether an intraTMP-LIC mode extension (e.g., the use of extended IntraTMP-LIC modes as described herein) is activated (e.g., enabled) for a slice associated with the block. The CABAC context for the fractional template matching indication associated with the block may be determined further based on whether the intraTMP mode-LIC extension is activated (e.g., enabled) for the slice associated with the block. For example, if (e.g., when) intraTMP-LIC mode extension is activated (e.g., enabled), a template shape may be selected (e.g., adaptively selected) from multiple available template shapes for performing IntraTMP-LIC associated with the block.

In examples, the device may determine, based on the obtained intraTMP-LIC mode activated (e.g., enabled) indication, that intraTMP-LIC mode is activated (e.g., enabled) for the block. The device may determine whether intraTMP-LIC mode extension is activated (e.g., enabled) for a slice associated with the block. Based on the determination that intraTMP-LIC mode is activated (e.g., enabled) for the block and the determination that intraTMP-LIC mode extension is activated (e.g., enabled) in the considered slice, picture, and/or sequence that is associated with the block, the device may obtain a first CABAC context for decoding the fractional template matching indication associated with the block. Based on the determination that intraTMP-LIC mode is activated (e.g., enabled) for the block and the determination that intraTMP-LIC mode extension is deactivated (e.g., disabled), the device may obtain a second CABAC context for decoding the fractional template matching indication associated with the block.

In examples, the device may determine whether an intraTMP-LIC mode extension is activated (e.g., enabled) for a slice associated with the block. The device may determine, based on the obtained intraTMP-LIC mode activated (e.g., enabled) indication, whether the intraTMP-LIC mode is activated for the block. Based on the determination that the intraTMP-LIC mode is activated (e.g., enabled) for the block and the determination that the intraTMP-LIC mode extension is activated (e.g., enabled), the device may obtain a first CABAC context for decoding the fractional template matching indication associated with the block. Based on the determination that the intraTMP-LIC mode is activated (e.g., enabled) for the block and the determination that the intraTMP-LIC mode extension is deactivated (e.g., disabled), the device may obtain a second CABAC context for decoding the fractional template matching indication associated with the block. Based on the determination that the intraTMP-LIC mode is deactivated (e.g., disabled) for the block, the device may obtain a third CABAC context for decoding the fractional template matching indication associated with the block.

In examples, the device may decode the fractional template matching indication associated with the block based on the obtained CABAC context for the fractional template matching indication. The block may be decoded based on the decoded fractional template matching indication. The fractional template matching indication may be configured to indicate whether an intraTMP fractional block vector (BV) mode is used to decode the block.

A device for video encoding may include a processor. The processor may be configured to perform one or more of the following.

In examples, the device for video encoding may determine whether to activate an intraTMP-LIC mode for a block. Based on the determination of whether to activate the intraTMP-LIC mode for the block, the device may determine a CABAC context for a fractional template matching indication associated with the block. The device may encode the fractional template matching indication associated with the block based on the CABAC context for the fractional template matching indication.

In examples, based on the determination of whether to activate the intraTM P-LIC mode for the block, the device may use a first CABAC context for encoding the fractional template matching indication associated with the block. Based on the determination of whether to deactivate the intraTM P-LIC mode for the block, the device may use a second CABAC context for encoding the fractional template matching indication associated with the block.

In examples, the device may determine whether an intraTMP-LIC mode extension is activated (e.g., enabled) for a slice associated with the block (e.g., is activated/enabled at a slice, picture, and/or a sequence level associated with the block). The CABAC context for the fractional template matching indication associated with the block may be determined further based on whether the intraTMP-LIC mode extension is activated (e.g., enabled).

In examples, the device may determine whether to activate (e.g., enable) an intraTMP-LIC mode extension for the block. Based on a determination to activate the intraTMP-LIC mode and a determination to activated (e.g., enabled) the intraTMP-LIC mode extension to encode the slice associated with the block, the device may use a first CABAC context for encoding the fractional template matching indication associated with the block. Based on a determination to activate the intraTMP-LIC mode and a determination to deactivate (e.g., disable) the intraTMP-LIC mode extension, the device may use a second CABAC context for encoding the fractional template matching indication associated with the block. Based on a determination of whether to deactivate (e.g., disabled) the intraTMP-LIC mode to encode the block, the device may use a third CABAC context for encoding the fractional template matching indication associated with the block.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. shows an example video decoder according to one or more embodiments of the present disclosure.

FIG. 4 shows an example reference region of an intra block copy (IBC) mode, where a (e.g., each) block represents 64x64 luma sample unit.

FIG. 5 shows example padding candidates for the replacement of the zero-vector in the IBC list.

FIG. 6 shows an example reference area for coding a coding tree unit (CTU) (m,n).

FIG. 7 shows an example of an Intra template matching search area used.

FIG. 8 shows an example spatial part of the filter.

FIG. 9 shows an example reference area used to derive the filter coefficients.

FIG. 10 shows an example decoder side parsing algorithm.

FIG. 11 shows an example coding unit (CU) decoding and reconstruction process.

FIG. 12 shows an example choice between various intra template matching prediction (TMP) prediction modes.

FIG. 13 shows an example decoder side Intra TMP prediction search accounting for local illumination compensation (LIC) usage for a given CU.

FIG. 14 shows an example of slope adjustment of a linear model.

FIG. 15 shows example decoder side Intra TMP syntax elements parsing process.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

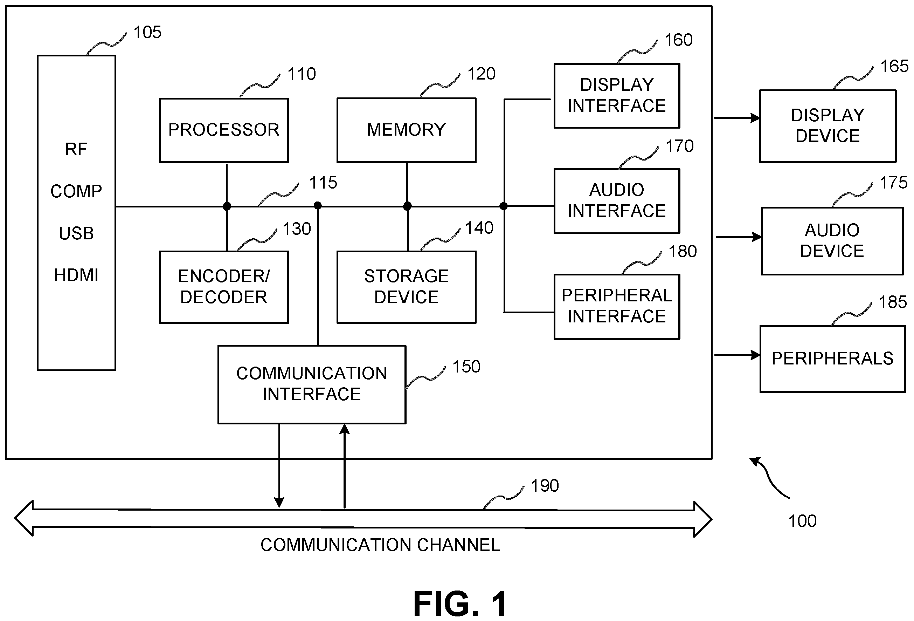

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g., cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

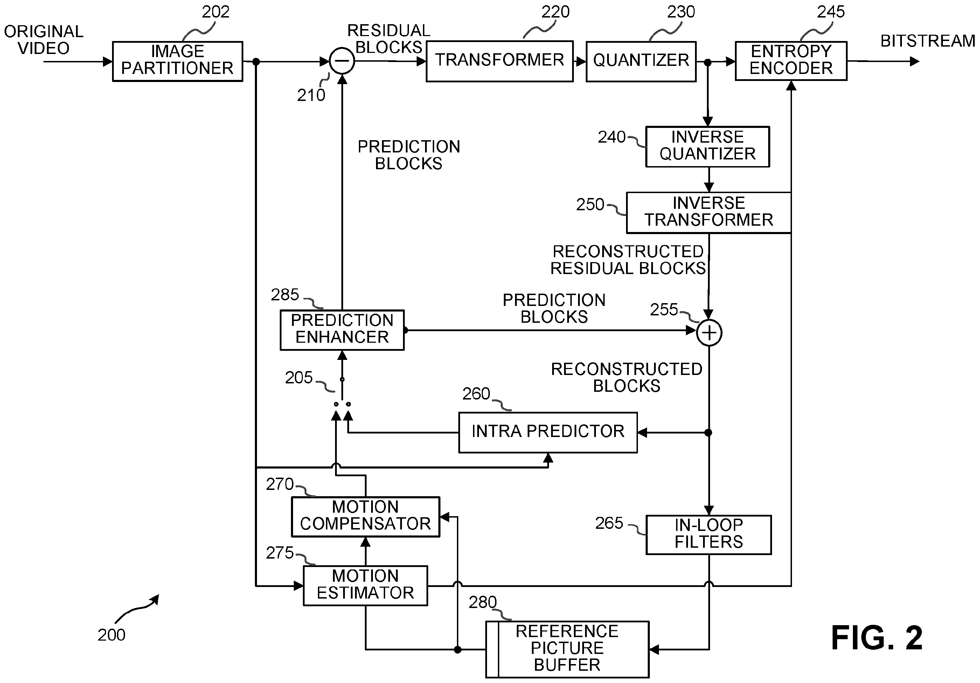

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

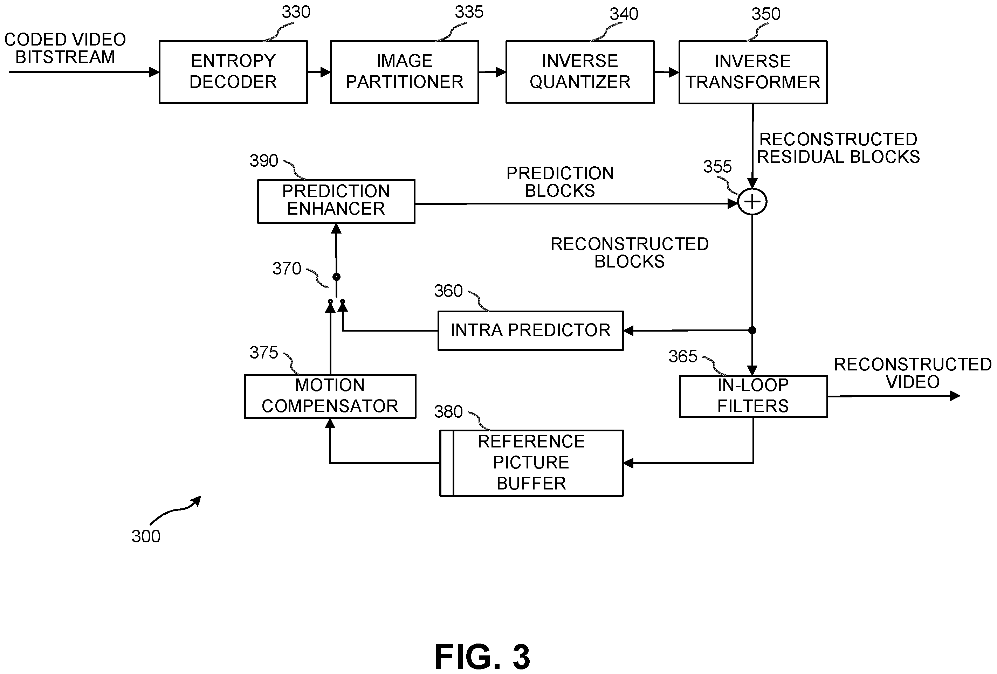

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are dequantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are dequantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for using an intra template matching prediction (TMP) fractional mode and/or intraTMP- local illumination compensation (LIC) mode. A context-adaptive binary arithmetic coding (CABAC) context for a fractional template matching indication associated with a block may be determined based on whether intraTMP-LIC mode is activated (e.g., enabled) for the block. The CABAC context for the fractional template matching indication associated with a block may be determined based on whether intraTMP-LIC mode is activated (e.g., enabled) for the block and whether intraTMP-LIC mode extension (e.g., the use of extended IntraTMP-LIC modes as described herein) is activated (e.g., enabled) for a slice associated with the block.

A device for video decoding may include a processor. The processor may be configured to perform one or more of the following.

In examples, the device for video decoding may obtain, in video data (e.g., in a bitstream), an intraTMP-LIC mode activated (e.g., enabled) indication. The intraTMP-LIC mode activated (e.g., enabled) indication may be configured to indicate whether intraTMP-LIC mode is activated for a block. Based on the obtained intraTMP-LIC mode activated (e.g., enabled) indication, the device may obtain (e.g., determine, select, and/or the like) a CABAC context for a fractional template matching indication associated with the block. The device may decode the fractional template matching indication associated with the block based on the CABAC context for the fractional template matching indication.

In examples, based on the intraTMP-LIC mode activated (e.g., enabled) indication indicating that intraTMP-LIC mode is activated (e.g., enabled) for the block, the device may use a first CABAC context for decoding the fractional template matching indication associated with the block. Based on the intraTMP-LIC mode activated (e.g., enabled) indication indicating that intraTMP-LIC mode is deactivated (e.g., disabled) for the block, the device may use a second CABAC context for decoding the fractional template matching indication associated with the block.

In examples, the device may determine whether an intraTMP-LIC mode extension (e.g., the use of extended IntraTMP-LIC modes as described herein) is activated (e.g., enabled) for a slice associated with the block. The CABAC context for the fractional template matching indication associated with the block may be determined further based on whether the intraTMP mode-LIC extension is activated (e.g., enabled) for the slice associated with the block. For example, if (e.g., when) intraTMP-LIC mode extension is activated (e.g., enabled), a template shape may be selected (e.g., adaptively selected) from multiple available template shapes for performing IntraTMP-LIC associated with the block.

In examples, the device may determine, based on the obtained intraTMP-LIC mode activated (e.g., enabled) indication, that intraTMP-LIC mode is activated (e.g., enabled) for the block. The device may determine whether intraTMP-LIC mode extension is activated (e.g., enabled) for a slice associated with the block. Based on the determination that intraTMP-LIC mode is activated (e.g., enabled) for the block and the determination that intraTMP-LIC mode extension is activated (e.g., enabled) in the considered slice, picture, and/or sequence that is associated with the block, the device may obtain a first CABAC context for decoding the fractional template matching indication associated with the block. Based on the determination that intraTMP-LIC mode is activated (e.g., enabled) for the block and the determination that intraTMP-LIC mode extension is deactivated (e.g., disabled), the device may obtain a second CABAC context for decoding the fractional template matching indication associated with the block.

In examples, the device may determine whether an intraTMP-LIC mode extension is activated (e.g., enabled) for a slice associated with the block. The device may determine, based on the obtained intraTMP-LIC mode activated (e.g., enabled) indication, whether the intraTMP-LIC mode is activated for the block. Based on the determination that the intraTMP-LIC mode is activated (e.g., enabled) for the block and the determination that the intraTMP-LIC mode extension is activated (e.g., enabled), the device may obtain a first CABAC context for decoding the fractional template matching indication associated with the block. Based on the determination that the intraTMP-LIC mode is activated (e.g., enabled) for the block and the determination that the intraTMP-LIC mode extension is deactivated (e.g., disabled), the device may obtain a second CABAC context for decoding the fractional template matching indication associated with the block. Based on the determination that the intraTMP-LIC mode is deactivated (e.g., disabled) for the block, the device may obtain a third CABAC context for decoding the fractional template matching indication associated with the block.

In examples, the device may decode the fractional template matching indication associated with the block based on the obtained CABAC context for the fractional template matching indication. The block may be decoded based on the decoded fractional template matching indication. The fractional template matching indication may be configured to indicate whether an intraTMP fractional block vector (BV) mode is used to decode the block.

A device for video encoding may include a processor. The processor may be configured to perform one or more of the following.

In examples, the device for video encoding may determine whether to activate an intraTMP-LIC mode for a block. Based on the determination of whether to activate the intraTMP-LIC mode for the block, the device may determine a CABAC context for a fractional template matching indication associated with the block. The device may encode the fractional template matching indication associated with the block based on the CABAC context for the fractional template matching indication.

In examples, based on the determination of whether to activate the intraTMP-LIC mode for the block, the device may use a first CABAC context for encoding the fractional template matching indication associated with the block. Based on the determination of whether to deactivate the intraTMP-LIC mode for the block, the device may use a second CABAC context for encoding the fractional template matching indication associated with the block.

In examples, the device may determine whether an intraTMP-LIC mode extension is activated (e.g., enabled) for a slice associated with the block (e.g., is activated/enabled at a slice, picture, and/or a sequence level associated with the block). The CABAC context for the fractional template matching indication associated with the block may be determined further based on whether the intraTMP-LIC mode extension is activated (e.g., enabled).

In examples, the device may determine whether to activate (e.g., enable) an intraTMP-LIC mode extension for the block. Based on a determination to activate the intraTMP-LIC mode and a determination to activated (e.g., enabled) the intraTMP-LIC mode extension to encode the slice associated with the block, the device may use a first CABAC context for encoding the fractional template matching indication associated with the block. Based on a determination to activate the intraTMP-LIC mode and a determination to deactivate (e.g., disable) the intraTMP-LIC mode extension, the device may use a second CABAC context for encoding the fractional template matching indication associated with the block. Based on a determination of whether to deactivate (e.g., disabled) the intraTMP-LIC mode to encode the block, the device may use a third CABAC context for encoding the fractional template matching indication associated with the block.

Intra block copy (IBC) coding may be performed.

Intra block copy may include a tool used for screen content coding. IBC may improve (e.g., significantly improve) the coding efficiency of screen content materials. IBC mode may be implemented as a block level coding mode. Block matching (BM) may be performed (e.g., because IBC mode may be implemented as a block level coding mode) at an encoder, e.g., to find a block vector (e.g., the optimal block vector) or motion vector for a (e.g., each) coding unit (CU). A block vector may indicate the displacement from the current block to a reference block, for example, which may be reconstructed (e.g., already reconstructed) inside the current picture. The luma block vector of an IBC-coded CU may be in an integer precision. The chroma block vector may round to integer precision (e.g., as well). The IBC mode may switch between 1-pel and 4-pel motion vector precisions, for example, if (e.g., when) combined with an adaptive motion vector resolution (AMVR). An IBC-coded CU may be treated as the third prediction mode (e.g., other than an intra mode and/or an inter prediction mode). The IBC mode may be applicable to one or more (e.g., all) CUs with both width and height smaller than or equal to 64 luma samples.

At the CU level, the IBC mode may be signaled with a flag. IBC mode may be signaled as an IBC AMVP mode or an IBC skip/merge mode as described herein.

In the IBC skip/merge mode, a merge candidate index may be used to indicate which of the block vectors in the list from neighboring candidate IBC coded blocks may be used to predict the current block. The merge list may include of spatial, history-based motion vector prediction (HMVP), and/or pairwise candidates.

In IBC AMVP mode, a block vector difference may be coded, for example, in the same way as a motion vector difference. The block vector prediction method may use (e.g., two) candidates as predictors, for example, one from a left neighbor and one from an above neighbor (e.g., if IBC coded). A default block vector may be used as a predictor, for example, if (e.g., when) a (e.g., either) neighbor is not available. A flag may be signaled to indicate the block vector predictor index.

An IBC reference region may be used and/or provided.

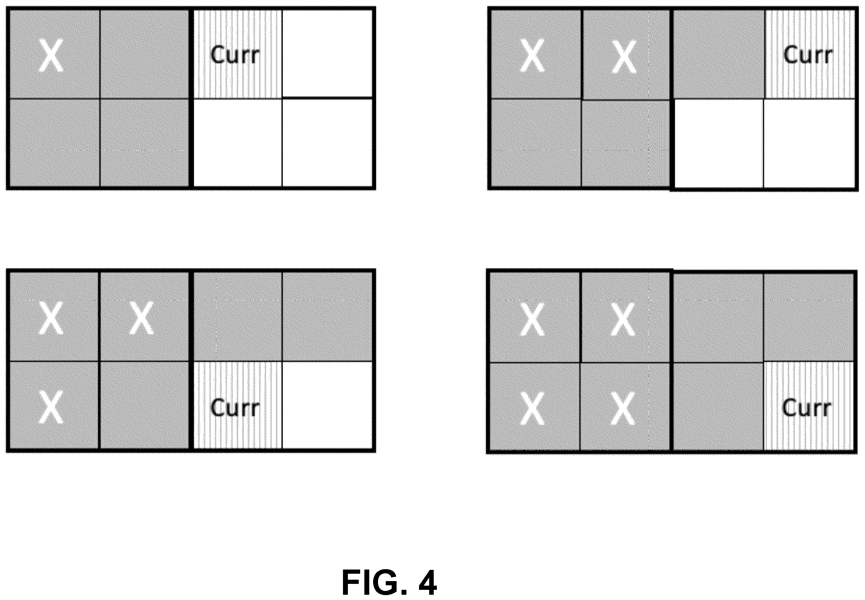

The IBC may allow (e.g., only) the reconstructed portion of the predefined area including the region of current coding tree unit (CTU) and some region of the left CTU, for example to limit memory consumption and/or decoder complexity. FIG. 4 illustrates an example reference region of IBC Mode, where a (e.g., each) block represents 64x64 luma sample unit. FIG. 4 further illustrates an example current CTU processing order and its available reference samples in current and left CTU.

Depending on the location of the current coding CU location within the current CTU, one or more of the following may apply.

The current block may (e.g., also, for example, in addition to the already reconstructed samples in the current CTU) refer to the reference samples in the bottom-right 64x64 blocks of the left CTU (e.g., using a current picture referencing (CPR) mode), for example, if current block falls into the top-left 64x64 block of the current CTU. The current block may (e.g., also) refer to the reference samples in the bottom-left 64x64 block of the left CTU and the reference samples in the top-right 64x64 block of the left CTU, for example, using the CPR mode.

The current block may (e.g., also, for example, in addition to the already reconstructed samples in the current CTU) refer to the reference samples in the bottom-left 64x64 block and bottom-right 64x64 block of the left CTU (e.g., using the CPR mode), for example, if the current block falls into the top-right 64x64 block of the current CTU, e.g., if luma location (0, 64) relative to the current CTU has not yet been reconstructed. Otherwise, the current block may (e.g., also) refer to reference samples in bottom-right 64x64 block of the left CTU.

The current block may (e.g., also, for example, in addition to the already reconstructed samples in the current CTU) refer to the reference samples in the top-right 64x64 block and bottom-right 64x64 block of the left CTU (e.g., using the CPR mode), for example, if the current block falls into the bottom-left 64x64 block of the current CTU, e.g., if the luma location (64, 0) relative to the current CTU has not yet been reconstructed. Otherwise, the current block may (e.g., also) refer to the reference samples in the bottom-right 64x64 block of the left CTU, for example, using the CPR mode.

The current block may refer (e.g., only refer) to the already reconstructed samples in the current CTU (e.g., using the CPR mode), for example, if current block falls into the bottom-right 64x64 block of the current CTU.

The IBC coding mode design based on the restrictions as described herein may allow the IBC mode to be implemented using local on-chip memory for hardware implementations.

IBC merge/AMVP list construction may be performed and/or activated (e.g., enabled).

The IBC merge/AMVP list construction may be modified, for example, accordingly as follows. An IBC merge/AMVP candidate may be inserted into the IBC merge/AMVP candidate list, for example, if (e.g., only if) the IBC merge/AMVP candidate is valid. Above-right, bottom-left, and above-left spatial candidates and one pairwise average candidate may be added into the IBC merge/AMVP candidate list. Template based adaptive reordering (ARMC-TM) may be applied to the IBC merge list.

The HMVP table size for IBC may be increased (e.g., to 25 entries). After a number of (e.g., up to 20) IBC merge candidates are derived with full pruning, the number of IBC merge candidates may be reordered together. A first number of (e.g., 6) candidates with the lowest template matching costs may be selected as the final candidates in the IBC merge list, for example, after reordering.

The zero vectors' candidates (e.g., to pad the IBC Merge/AMVP list) may be replaced with a set of block vector prediction (BVP) candidates located in the IBC reference region. A zero vector may be invalid as a block vector in IBC merge mode. A zero vector may be discarded as the BVP in the IBC candidate list because the zero vector may be considered as invalid as a block vector in IBC merge mode.

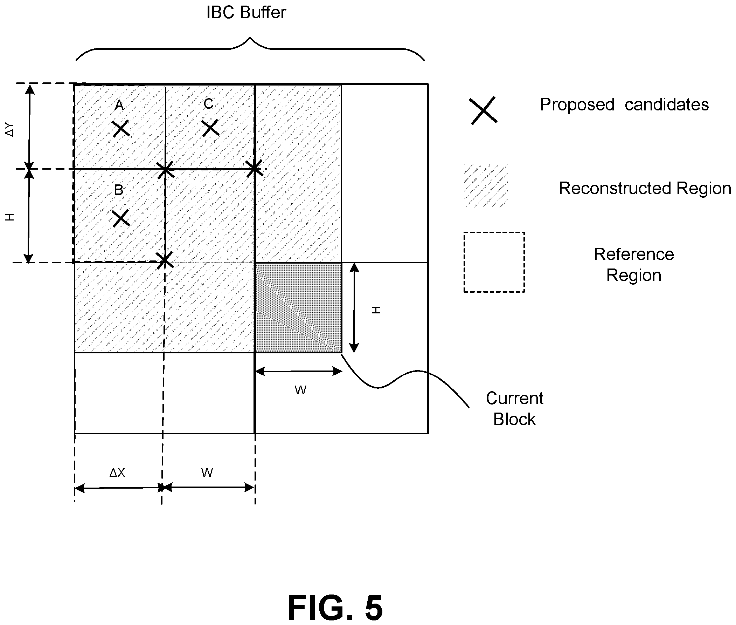

A number of (e.g., three) candidates may be located on the (e.g., nearest) corners of the reference region, and a number of (e.g., three) additional candidates may be determined to be in the middle of (e.g., the three) sub-regions (e.g., A, B, and C, for example, as shown in FIG. 5), whose coordinates may be determined by the width, and height of the current block and the $\Delta X$ and $\Delta Y$ parameters, for example, as depicted in FIG. 5.

FIG. 5 illustrates example padding candidates for the replacement of the zero-vector in the IBC list.

An IBC reference region may be used, provided, and/or activated (e.g., enabled).

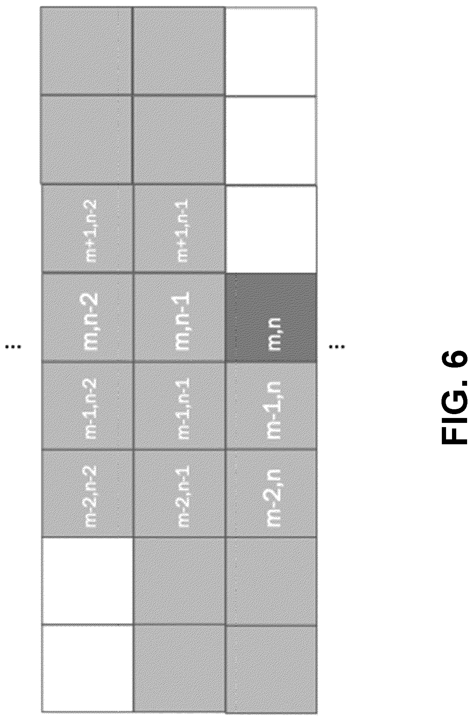

The reference region for IBC may be extended, for example, to two CTU rows above the CTU being processed by the encoder or the encoder. FIG. 6 illustrates an example reference area for coding CTU (m,n). The reference area may include CTUs with index (m-2,n-2)...(W,n-2),(0,n-1)...(W,n-1),(0,n)...(m,n) (e.g., where W may denote the maximum horizontal index within the current tile, slice or picture), for example, (e.g., specifically) for CTU (m,n) to be coded,. The per-sample block vector search (e.g., or referred and/or called local search) range may be limited to [-(C « 1), C » 2] horizontally and [-C, C >> 2] vertically, for example, to adapt to the reference area extension (e.g., where C may denote the CTU size).

FIG. 6 further illustrates an extended reference region for IBC.

IBC may be used and/or performed with template matching.

Template matching (TM) based motion search and refinement may be applied to the case of Intra Block Copy.

An IBC-TM merge mode may be used. The IBC-TM merge mode may involve a merge candidate list for Block Vector (BV) prediction (e.g., which may be different from the one used by regular IBC merge mode). The candidates may be selected, for example, according to a pruning method with a motion distance between the candidates as in the regular TM merge mode. The zero motion candidates may be replaced by (-W, 0), (0, -H), (-W, -H) MVs.

In the IBC-TM merge mode, the selected candidates may be refined with the template matching method. The TM-merge flag may be signaled to indicate the template matching merge IBC mode.

In the IBC-TM AMVP mode, candidates (e.g., up to 3 candidates) may be selected from the IBC-TM merge list. A candidate (e.g., each of those candidates) may be refined, for example, according to the usual template matching method and may be sorted according to their resulting TM cost.

TM refinement may be performed at integer pel position (e.g., if/when used for IBC). In IBC-TM AMVP mode, TM refinement may be performed either at integer or 4-pel precision, for example, depending on the AMVR value. The refinement may be performed (e.g., done) within the existing IBC reference area.

IBC may interact with other coding tools.

The interaction between IBC mode and other inter coding tools (e.g., such as pairwise merge candidate, history-based motion vector predictor (HMVP), combined intra/inter prediction mode (CIIP), merge mode with motion vector difference (MMVD), and geometric partitioning mode (GPM)) may be described as follows.

IBC may be used with pairwise merge candidate and/or HMVP. A (e.g., new) pairwise IBC merge candidate may be generated by averaging (e.g., two) IBC merge candidates. For HMVP, IBC motion may be inserted into a history buffer, for example, for future referencing.

IBC may be refrained from being used (e.g., cannot be used) in combination with the certain inter tools (e.g., affine motion).

IBC may be used in combination with CIIP, MMVD, and GPM.

IBC may be refrained from being used (e.g., not allowed) for the chroma coding blocks, for example, if (e.g., when) a DUAL_TREE partition is used.

The current picture is not included as one of the reference pictures in the reference picture list 0 for IBC prediction, for example, unlike in the screen content coding extension. The derivation process of motion vectors for IBC mode may exclude one or more (e.g., all) neighboring blocks in inter mode and vice versa. One or more of the following IBC design aspects may be applied.

IBC may use a process (e.g., the same process as regular MV merge), for example, including using pairwise merge candidate and history-based motion predictor but refrain from using (e.g., disallow) TMVP and zero vector (e.g., because they may be invalid for IBC mode).

A separate HMVP buffer (e.g., 5 candidates each) may be used for MV and IBVC (e.g., conventional MV and IBC).

Block vector constraints may be implemented in the form of a bitstream conformance constraint. The encoder may (e.g., need to) ensure that no invalid vectors are present in the bit-stream. Merge may be refrained from being used (e.g., may not be used), for example, if the merge candidate is invalid (e.g., out of range or 0). Such bitstream conformance constraint may be expressed in terms of a virtual buffer as described herein.

For deblocking, IBC may be handled as an inter mode.

AMVR may refrain from using (e.g., not use) quarter-pel, for example, if the current block is coded using IBC prediction mode. AMVR may be signaled to indicate whether MV is inter-pel or 4 integer-pel.

The number of IBC merge candidates may be signaled, for example, in the slice header (e.g., separately from the numbers of regular, subblock, and geometric merge candidates).

IBC and local illumination compensation (LIC) may be used jointly.

IBC may be used with the inter prediction enhancement tool which may be referred to as LIC.

LIC may include an inter prediction technique to model local illumination variation between current block and its prediction block as a function of that between current block template and reference block template. The parameters of the function may be denoted by a scale a and an offset $\beta$, which may form a linear equation. The linear equation may be formed as $a*p[x]+\beta$, e.g., to compensate illumination changes. p[x] may be a reference sample pointed to by MV at a location x on reference picture. The MV may be clipped with wrap around offset taken into consideration, for example, if (e.g., when) wrap around motion compensation is activated (e.g., enabled). Because a and $\beta$ may be derived based on current block template and reference block template, signaling overhead may be refrained from being sent. An LIC flag may signaled for AMVP mode to indicate the use of LIC.

Local illumination compensation may be used for uni-prediction inter CUs with one or more of the following modifications: intra neighbor samples may be used in LIC parameter derivation; LIC may be deactivated (e.g., disabled) for blocks with less than 32 luma samples; for both non-subblock and affine modes, LIC parameter derivation may be performed based on the template block samples corresponding to the current CU (e.g., instead of partial template block samples corresponding to first top-left 16x16 unit); samples of the reference block template may be generated by using MC with the block MV (e.g., without rounding it to integer-pel precision).

Intra block copy with local illumination compensation (IBC-LIC) may compensate (e.g., aim at compensating) the local illumination variation within a picture between the CU coded with IBC and its prediction block with a linear equation. The parameters of the linear equation may be derived, for example, similar to (e.g., the same as) the LIC for inter prediction (e.g., except that the reference template may be generated using block vector in IBC-LIC). IBC-LIC may be applied to IBC AMVP mode and IBC merge mode. For IBC AMVP mode, an IBC-LIC flag may be signaled to indicate the use of IBC-LIC. For IBC merge mode, the IBC-LIC flag may be inferred from the merge candidate.

Intra Template Matching Prediction (ITMP) mode may be used and/or activated (e.g., enabled).

Intra template matching prediction (intra TMP) may be an intra prediction mode (e.g., a special intra prediction mode) that copies the best prediction block from the reconstructed part of the current frame, whose L-shaped template matches the current template. For a predefined search range, the encoder may search for the most similar template to the current template in a reconstructed part of the current frame and may use the corresponding block as a prediction block. The encoder may signal the usage of this mode, and the same prediction operation may be performed at the decoder side.

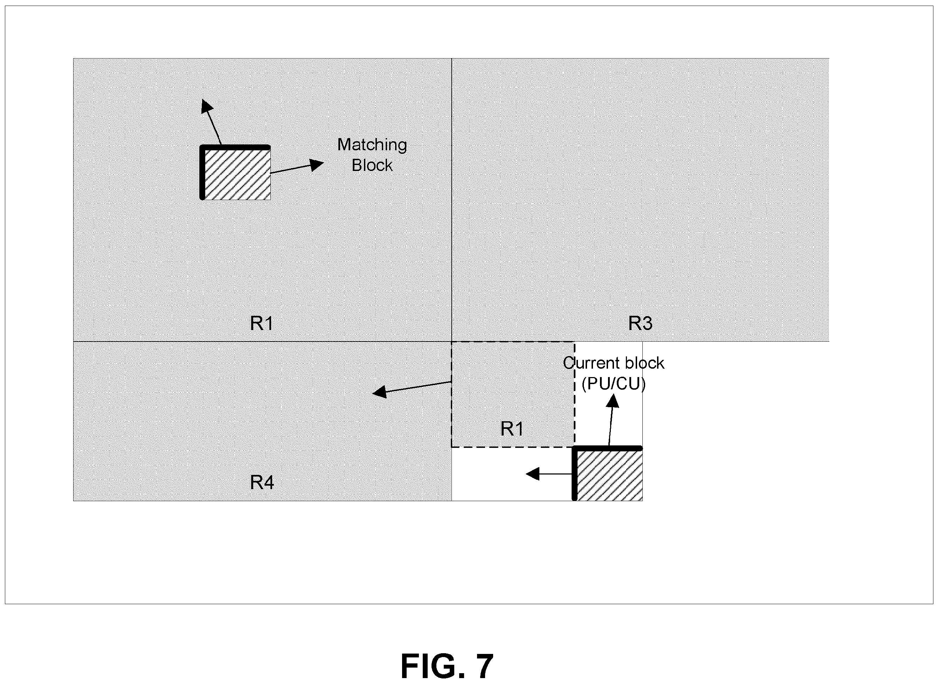

The prediction signal may be generated by matching the L-shaped causal neighbor of the current block with another block in a predefined search area (e.g., as shown in FIG. 7) that may include: R1, a current CTU; R2, a top-left CTU; R3 an above CTU; and/or R4, a left CTU.

Sum of absolute differences (SAD) may be used as a cost function.

Within a (e.g., each) region, the decoder may search for a template that has the least SAD with respect to the current one and may use its corresponding block as a prediction block.

The dimensions of the (e.g., all) regions (e.g., SearchRange_w, SearchRange_h) may be set proportional to the block dimension (BlkW, BlkH) to have a fixed number of SAD comparisons per pixel, for example, as according to Eqs. 1 and 2:

$$SearchRange\_w = a * BlkW \qquad Eq.\ 1$$

$$SearchRange\_h = a * BlkH \qquad Eq.\ 2$$

Where 'a' may be a constant that controls the gain/complexity trade-off. In examples, 'a' may equal to 5.

FIG. 7 illustrates an example of an Intra template matching search area used.

The Intra template matching tool may be activated (e.g., enabled) for CUs with size less than or equal to 64 in width and height. The maximum CU size for Intra template matching may be configurable.

The Intra template matching prediction mode may be signaled at CU level through a flag (e.g., dedicated) flag, for example, if (e.g., when) DIMD is not used for the current CU.

Intra TMP may be performed, for example, based on a linear filter model (e.g., Intra TMP-FLM prediction mode).

Intra TMP may be used in combination with a convolution filtering method (e.g., as described herein).

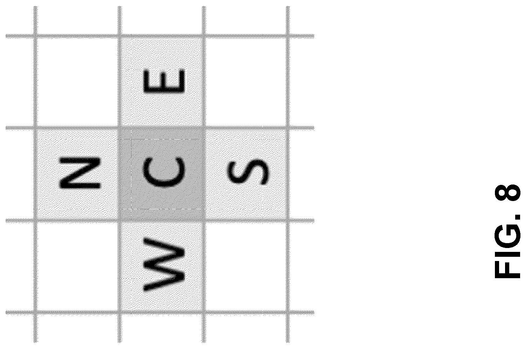

A 6-tap filter (e.g., which may include of a 5-tap plus sign shape spatial component and a bias term) may be used (e.g., adaptively) used to enhance the Intra TMP block prediction. The input to the spatial 5-tap component of the filter may include a center C sample in the reference block which may be at corresponding locations with the sample in the current block to be predicted and its above/north (N), below/south (S), left/west (W) and right/east (E) neighbors (e.g., as shown in FIG. 8). FIG. 8 illustrates an example spatial part of the filter.

The bias term B may represent a scalar offset between the input and output and may be set to a middle luma value (e.g., 512 for 10-bit content).

An output of the filter may be, for example, according to Eq. 3.

$$predLumaVal = c0C + c1N + c2S + c3E + c4W + c5B \qquad Eq.\ 3$$

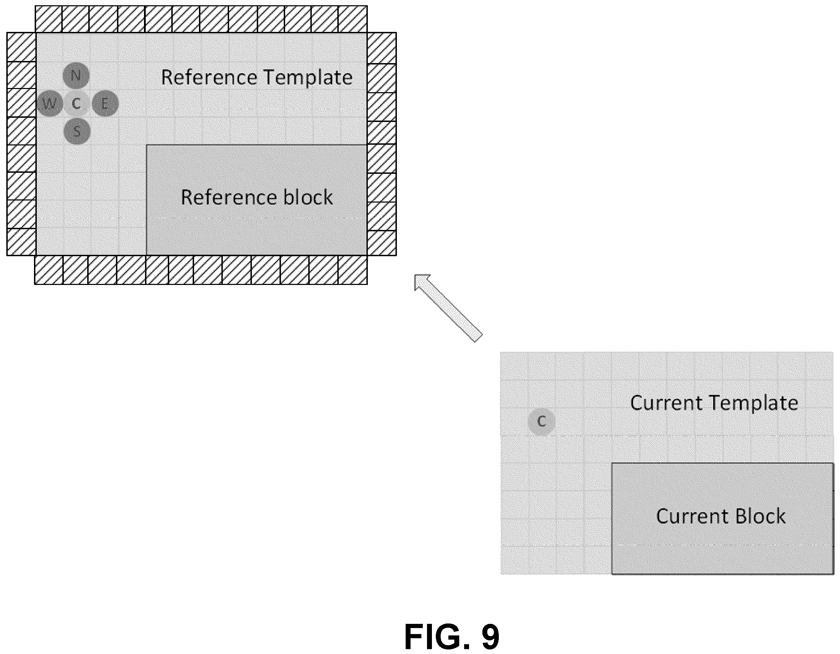

The filter coefficients $c_i$ may be calculated by minimizing the MSE between the reference template and current template (e.g., as shown in FIG. 9). Template size and shapes may be the same as in intraTMP. The template size used for training may be 4 lines above and to the left of the current block, for example, depending on their availability. The extensions to the area (e.g., shown in shaded area of FIG. 9) may be used (e.g., needed) to support the "side samples" of the plus shaped spatial filter and may be padded if (e.g., when) in unavailable areas. FIG. 9 illustrates an example reference area used to derive the filter coefficients.

Usage of the Intra TMP-FLM mode may be signaled, for example, using a coded CU level flag. Intra TMP-FLM may be (e.g., considered) a sub-mode of Intra TMP. An Intra TMP-FLM flag may be (e.g., only) signaled if the Intra TMP flag is true.

The filtering (e.g., as described herein) may include applying the linear filter model to IBC predicted blocks.

This filtered mode may be used as an additional mode for non-merge IBC blocks. For non-merge blocks, this mode may be refrained from being applied (e.g., may not be applied) together with IBC-LIC, IBC-CliP, or reconstruction-reordered IBC (RR-IBC). For IBC merge modes, this filtering mode may be inherited, for example, if (e.g., when) merge mode list is constructed (e.g., so there is no extra signaling).

The adaptive usage of the LIC of linear filter model for IBC predicted block (e.g., together with block-level signaling of the prediction mode used) may lead to increased compression performances.

The combined use of Intra TMP with the linear filter model may be considered, for example, with respect to the Intra TMP prediction mode (e.g., only).

The compression efficiency of IBC coding mode may be optimized through the adaptive choice of combining IBC with LIC, 6-tap linear filter model (FLM), or neither of the two.

Intra TMP prediction mode in ECM may be used (e.g., only be used) in combination with the FLM filtering method. A potential lack of video compression performances may result from this.

Compression performance of the Intra TMP prediction mode may be increased.

As described herein, LIC may be used in combination with Intra TMP. One or more of the following may apply or be performed.

The use of LIC (e.g., at CU level) may be adaptively selected, for example, for an Intra TMP predicted CU. The use of LIC for an Intra TMP CU may be signaled, for example, through a CU-level context-adaptive binary arithmetic coding (CABAC) codec flag. There may be mutual exclusion of Intra TMP-LIC and Intra TMP-FLM prediction modes. LIC flag information may be included in the block vector information propagated from an Intra TMP to an IBC prediction CU later in the picture. LIC luma compensation may be included during the Intra TMP prediction block search. LIC on candidate(s) (e.g., all or part of the candidates) may be applied (e.g., if CU LIC flag is on), for example, in the case of Multiple Intra TMP candidates being used and blended to predict current CU.

LIC may be signaled, for example, as a sub-mode of the Intra TMP prediction mode of an Intra coding unit.

An indication (e.g., a CU-level flag) may be signaled, for example, that indicates the usage of LIC for a CU predicted with Intra TMP mode.

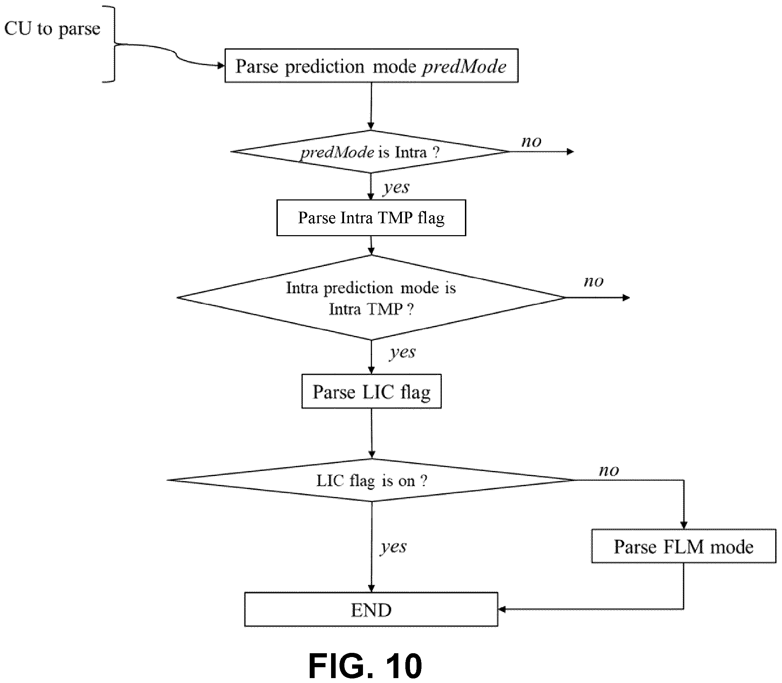

FIG. 10 illustrates an example decoder side parsing algorithm. FIG. 10 further illustrates a subset of the overall coding unit parsing process, for example, focused on Intra TMP related syntax elements. The prediction mode (e.g., an Intra prediction mode and/or an Inter prediction mode) of the current CU may be parsed. Actions (e.g., not shown in FIG. 10) may be taken, for example, if the prediction mode is not an Intra prediction mode. One or more of the following parsing steps may include the parsing of the Intra TMP usage flag for current CU, for example, if the CU is in an intra mode. Intra TMP prediction may be used in current CU, for example, if this flag is on.

The LIC flag may be parsed (e.g., which may indicate LIC is active for the current CU), for example, in the case of an Intra TMP CU. The process illustrated in FIG. 10 may end, for example, if LIC is on for current CU. Otherwise, if LIC is off for current CU, then the linear filter model (LFM) usage flag may be parsed.

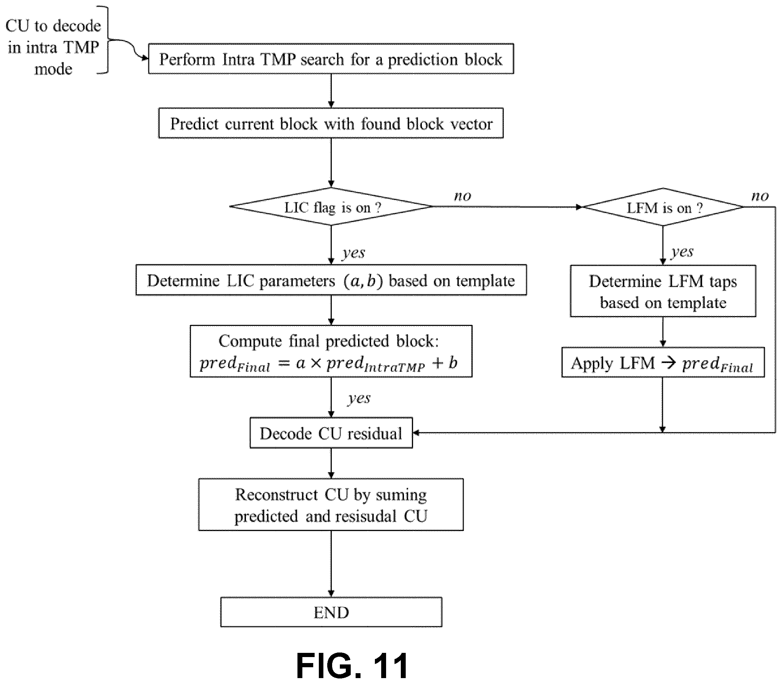

FIG. 11 illustrates an example CU decoding and reconstruction process that may be used at decoder side, for example, after the parsing process shown in FIG. 10.

The input to the process of FIG. 11 may be a CU to decode and reconstruct in Intra TMP mode. The Intra TMP search for the prediction block of current CU may be performed. The current CU may be predicted based on the found prediction block, which may lead to predicted block pred_IntraTMP.

The LIC flag associated with current CU (e.g., issued from the parsing stage as shown in FIG. 10) may be checked. The LIC linear model parameters (e.g., noted a and b) may be determined (e.g., if LIC is on for current CU), for example, in the same way as for Inter or IBC CU. The (e.g., final) prediction of the current CU may be computed as pred_Final=a×pred_IntraTMP+b, for example, as is done for Inter and IBC block in LIC mode.

The CU may be predicted, for example, in the case a LIC flag is off for a current CU. The FLM filtering taps may be computed based on CU template and prediction block template (e.g., if linear filter model (FLM) usage is on). The linear filter model may be applied to computed final predicted CU. The (e.g., final) prediction of the current CU may be taken as the Intra TMP predicted block, for example, if FLM is off.

The CU residual block may be decoded and may be added to the final predicted CU (e.g., to produce the reconstructed coding unit), for example, if (e.g., once) the (e.g., final) prediction of current CU is obtained. The process illustrated in FIG. 11 may end, for example after the CU residual block is decoded and added to the final predicted CU.

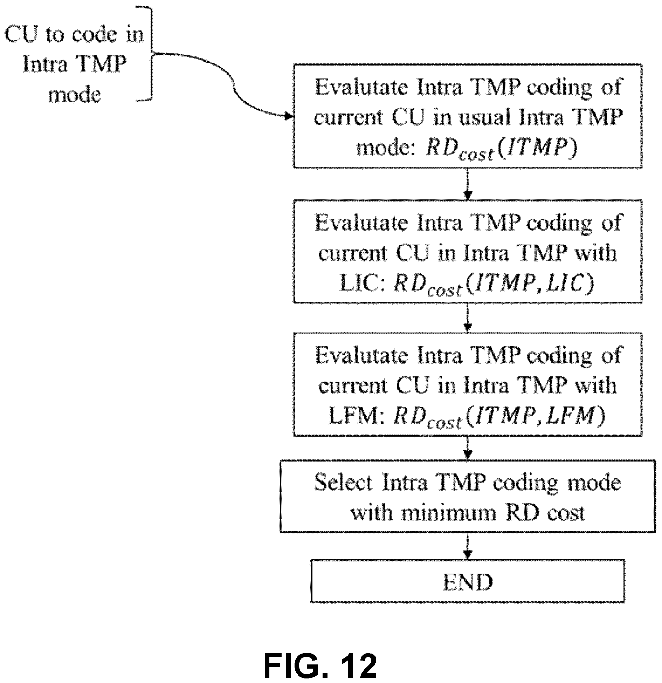

FIG. 12 illustrates an example choice between various intra TMP prediction modes. An encoder-side Intra TMP mode selection may be performed (e.g., as shown in FIG. 12), for example, in combination with the parsing and decoder processes (e.g., as described herein). FIG. 12 illustrates an example subset of the coding and prediction mode selection (e.g., that may happen on the encoder side), for example, focused on the Intra TMP prediction mode selection (e.g., as described herein).

The input to the process may be a CU (e.g., to encode). A (e.g., usual) Intra TMP prediction mode (e.g., without the use of FLM or LIC) may be evaluated. This may involve the computation of the rate cost and the distortion resulting from predicting and coding the current CU according to this Intra TMP prediction mode. It may lead to the computation of the rate distortion cost RD_cost (ITMP) associated to the coding of current CU in Intra TMP mode without LIC and without FLM.

The rate distortion cost RD_cost (ITMP,LIC) may be computed. The rate distortion cost RD_cost (ITMP,LIC) may be obtained by coding current CU in Intra TMP mode with LIC on

The rate distortion cost RD_cost (ITMP,FLM) may be computed. The rate distortion cost RD_cost (ITMP,FLM) may be obtained by coding current CU in Intra TMP mode with FLM on

The Intra TMP prediction configuration leading to minimal rate distortion cost may be chosen as the (e.g., best) Intra TMP prediction and coding of current CU.

The modes evaluated here may be put in Rate Distortion competition with prediction and coding modes (e.g., other than Intra TMP), for example, in order to (e.g., optimally) compress the considered CU.

The considered CU may be compressed and coded according to the coding mode leading to minimal rate distortion cost among Intra TMP and non Intra TMP coding modes.

LIC usage may be integrated in the Intra TMP prediction search (e.g., on both decoder and encoder sides).

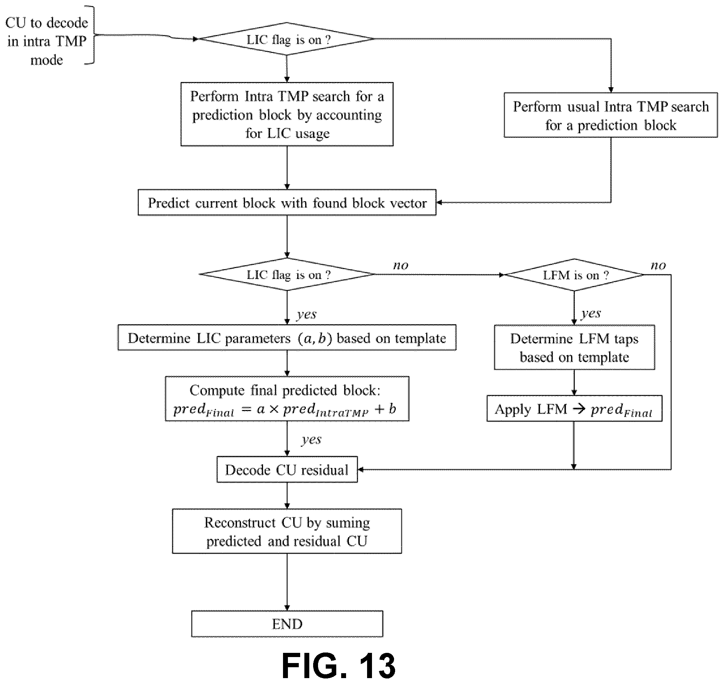

LIC may be taken into account during the Intra TMP prediction search process, for example, if (e.g., when) LIC is used to code/decode a CU in Intra TMP mode (e.g., as shown in FIG. 13). The beginning (e.g., only the beginning) of the CU decoding process may be modified (e.g., as compared with FIG. 11). The LIC flag issued from the parsing may be checked. The (e.g., usual) Intra TMP search may be applied, for example, if the LIC flag is off. Otherwise, the LIC process may be integrated to the Intra TMP search, for example leading to a (e.g., potentially) better Intra TMP+LIC predictor block as compared with other TMP+LIC predictor blocks as described herein.

One or more of the following may apply (e.g., to take LIC into account during the Intra TMP prediction search process). The LIC parameters (a,b) may be determined between the template area at the candidate prediction block position and the template area around current CU, for example, for a (e.g., each) Intra TMP candidate prediction block position. The LIC process may be applied onto samples in the template area of the candidate prediction block. The sum of absolute differences (SAD) distortion between the LIC-modified template and current CU-s template may be computed, for example, to evaluate the candidate Intra TMP prediction candidate (e.g., as shown in Eq. 4).

$$D(Template_{cand}, Template_{curr}) = SAD(a \times Template_{cand} + b, Template_{curr}) \quad Eq. 4$$

The Intra TMP predictor of current CU may be taken as the predictor leading to minimal SAD computed, for example, according to Eq. 4.

The remainder of the CU decoding process may be (e.g., left) unchanged, for example, as compared to modifying the remaining of the CU decoding process (e.g., as described herein).

FIG. 13 illustrates an example decoder side Intra TMP prediction search accounting for LIC usage for a given CU.

In examples, LIC and FLM usages may be mutually exclusive in the coding/decoding of an Intra TMP coding unit. Either LIC, FLM, or none of them may be used (e.g., LIC and/or FLM may be refrained from being used) in the coding /decoding of a Intra TMP CU.

In examlpes, LIC and FLM may be jointly used, for example, in a cascading way. LIC may be applied first (e.g., before FLM). FLM filter parameters may be learned (e.g., after LIC is applied) and may be applied by taking into account the action of LIC onto the predicted block.

The LIC flag associated to an Intra TMP CU may be stored together with the Block Vector information. It may be used to propagate prediction information to further coding units that are coded in IBC mode in the same picture. The Block Vector and LIC-related information associated to a past CU coded in Intra TMP mode may be used to derive the prediction parameters of the IBC-merge CU, for example, (e.g., typically) if (e.g., when) a CU is coded in IBC-merge mode. The block vector of that Intra-TMP and the LIC flag of that Intra TMP CU may be assigned to the current IBC coding unit, for example, if (e.g., when) the merge index of the IBC CU identifies a merge candidate corresponding to a CU previously coded in Intra-TMP mode.

Intra TMP with multiple prediction candidates may be used. Multiple Intra TMP prediction candidates may be generated. The candidate effectively used to predict current CU may be signaled, for example, among the plural Intra TMP candidates. An Intra TMP fusion prediction mode may be supported. Intra TMP fusion prediction mode may include (e.g., in a signal) a range of Intra TMP predictors candidates which may be combined through a weighted average to compute the final prediction of current CU.

The LIC related information may be signaled by the Intra TMP index. Among the plural Intra TMP candidates, some candidates may use LIC and some candidates may refrain from using (e.g., not use) LIC to compute the final prediction of current CU.

The LIC related information may be signaled by the Intra TMP fusion index. Among the plural Intra TMP fusion candidates, some of the candidates may use LIC and some candidates may refrain from using (e.g., not use) LIC to compute the final prediction of current CU.

The LIC flag may be coded (e.g., separately coded) from the Intra TMP index and Intra TMP fusion index. LIC may apply to the selected Intra TMP candidate, for example, if (e.g., when) the LIC flag is on and no intra TMP fusion is used for the current intra TMP CU.

The LIC flag may apply to one or more (e.g., all) Intra TMP candidates which undergo the fusion process, for example, if (e.g., when) intra TMP fusion is on.

The LIC flag may be inferred to be false at the decoder side, for example, (e.g., alternatively) if (e.g., when) intra TMP fusion is on.

IBC may be used (e.g., jointly used) with LIC (e.g., as described herein). The joint usage may be referred to as an IBC-LIC coding mode. The IBC-LIC coding mode may be extended to additional modes (e.g., three additional modes). Two added modes may include using IBC-LIC with top-only or left-only templates, for example, for deriving the LIC linear model (e.g., in addition to and/or alternative to the L-shape template).

A third mode may include a multi-model linear model (MMLM) in IBC-LIC. The MMLM may include computing and applying linear models (e.g., two separate) linear models in the LIC process.

The samples in the L-shape template may be grouped into subsets (e.g., two separate subsets), for example, according to their luma value. A (e.g., each) sample in the template may be associated to a linear mode (e.g., the one of the two linear modes). The two linear models may be respectively computed over a (e.g., each) sub-group. A (e.g., each) sample in the predicted block may be assigned one of the two linear models, e.g., based on the luma value and may be applied the considered linear model. During the IBC prediction of a block, the linear model may be applied to a (e.g., each) predicted sample, for example, by means of the linear model respectively assigned to a (e.g., each) sample.

The LIC-Intra TMP process may be extended, for example, to support Intra TMP-LIC (Itmp-LIC) modes (e.g., three additional Itmp-LIC modes), for example, similarly to what is done in IBC-LIC mode.

To do so, an index may be signaled for a CU to indicate the Itmp-LIC mode between default Itmp-LIC, multi-model Itmp-LIC, top-only Itmp-LIC and left-only Itmp-LIC, for example, if (e.g., when) a coding unit is in Intra TMP mode and LIC is activated for that CU.

Table 1 shows example index values associated to a (e.g., each) Itmp-LIC mode, for example, if (e.g., when) the indication (e.g., flag) indicating the usage of LIC in an Intra-Tmp CU is true.

Table 1

| IntraTMP-LIC model index Value | Mode |
|---|---|
| 0 | Default IntraTMP-LIC |
| 1 | Multi-model IntraTMP-LIC |
| 2 | Top-only IntraBC-LIC |
| 3 | Left-only IntraTMP-LIC |

In examples, the use of extended IntraTMP-LIC modes may be signaled at a high level, for example, under the form of an indication (e.g., flag) signaled in the Sequence Parameter Set (SPS) (e.g., which may be the sequence-level header data container).

The use of extended IntraTMP-LIC modes may be signaled in Picture Parameter Set (PPS), Picture Header, or Slice Header.

The use of the proposed IntraTMP-LIC extension may be signaled (e.g., first signaled) at a sequence level in the SPS and may be overridden in a lower level header data container (e.g., any of the lower levels header data containers) among Picture Paramater Set, Picture Header, or Slice Header.

The extension of IntraTMP-LIC may be activated (e.g., only be activated) for the coding/decoding of a graphical video content (e.g., a screen content). The extension of IntraTMP-LIC may be deactivated for the coding/decoding of a camera captured video content (e.g., a natural video content)

The IntraTMP-LIC extension may improve the compression performance of state-of-the-art video compression on screen content videos.

In examples, the usage of the IntraTMP-LIC extension may be based on an analysis of a video (e.g., the original video) or image to compress, for example, which may determine whether the original video content is of graphical type or rather corresponds to a camera-captured video/image content.

Such analysis may be performed, for example, at the encoder side (e.g., or decoder side). The header data (e.g., SPS, PPS, Picture header, or Slice header) may be signaled according to whether the input content is determined to be of graphical type or not.

In examples, the IntraTMP-LIC mode may be extended to support slope adjustment.

The liner models supported by IBC-LIC may be adjusted for example, through slope adjustment.

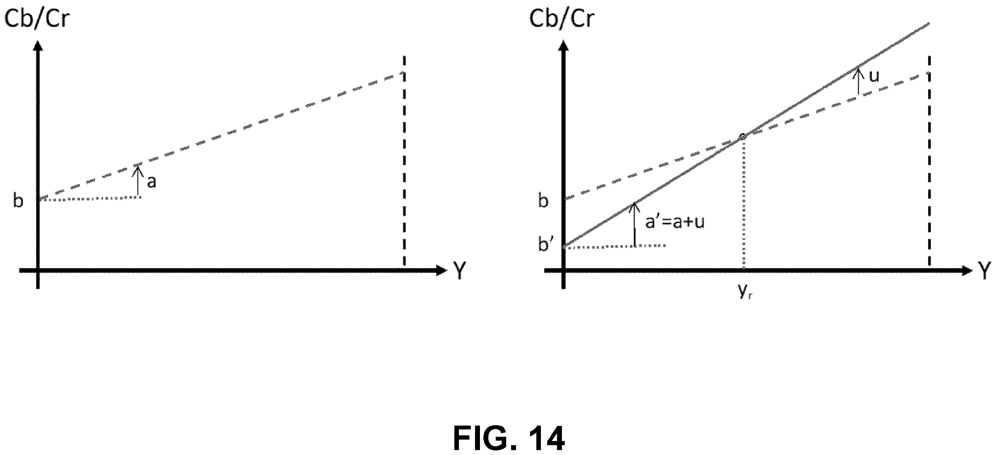

Slope adjustment for a linear model may be described as the following. It may be assumed that a liner model with parameters (a,b) may be used to enhance a predicted block through the linear a.x+b function applied on the predicted block. Slope adjustment may include adjusting linear parameters a and b through the explicit signaling of an additive slope modification parameter u which may change the slope from a to (a+u). The offset parameter b may be adjusted accordingly (e.g., as shown in FIG. 14).

FIG. 14 illustrates an example slope adjustment of a liner model. A model may be derived by IBC-LIC process without slope adjustment as shown in FIG. 14. A model may be updated using slope adjustment, for example, as shown in FIG. 14.

The IntraTMP-LIC prediction mode may be extended to use slope adjustment with it.

To do so, the signaling of IntraTMP-LIC mode may be extended.

An indication (e.g., a CU-level indication, such as a flag) may be signaled to indicate that slope adjustment is used for a CU coded in intraTMP mode, and in which LIC is active.

The additive slope adjustment parameter u may be signaled under the form of an index, for example, if the slope adjustment indication (e.g., flag) is true for the considered CU. A lookup table linking the index value, and the additive slope adjustment parameter u may be used (e.g., at the decoder side), for example, to derive the u parameter value from the parsed slope adjustment index value.

Intra TMP prediction with fractional block vector (BV) may be performed. Fractional BV may mean that the accuracy level of BV representation is finer than the one-pel accuracy level. For example, if the FLM linear filtering mode is off for the considered Intra TMP CU, a fractional BV may be used for the CU.

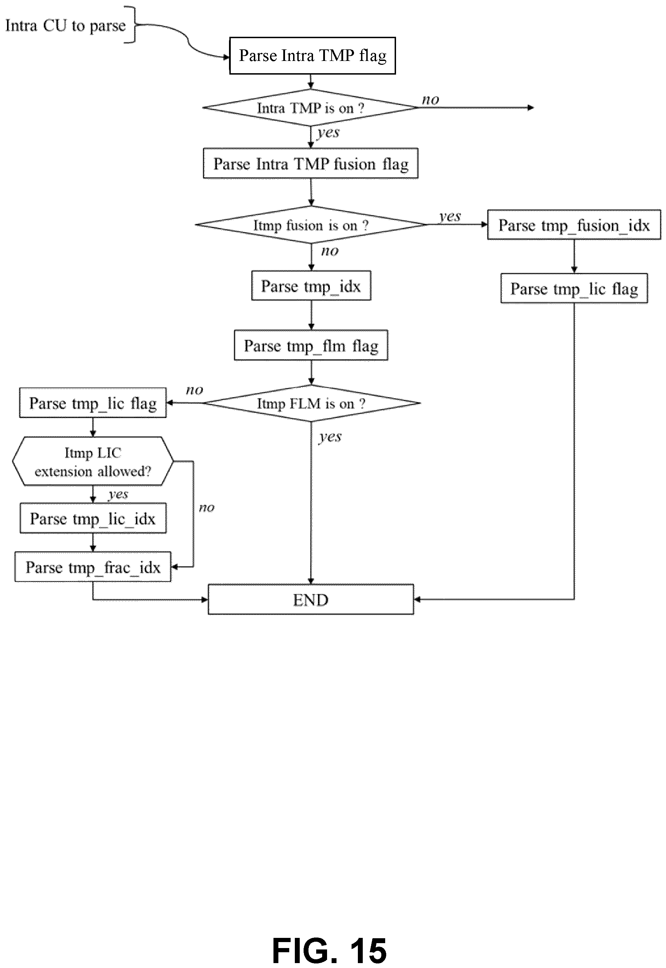

The apparatus (e.g., for video decoding and/or the decoder) may perform as described herein, e.g., for the parsing process. FIG. 15 illustrates example decoder side Intra TMP syntax elements parsing process. For example, the parsing of Intra-TMP related syntax elements may proceed as follows. The input to the process of FIG. 15 may be an Intra CU to parse. The apparatus (e.g., the decoder) may decode an Intra TMP indication (e.g., such as an intraTMP flag). For example, the apparatus may check the Intra TMP indication (e.g., the intraTMP flag) to determine whether the indication (e.g., the flag) is true or false. If the indication (e.g., the flag) indicates false, the apparatus may determine that the CU is not in the Intra-TMP mode and the process illustrated in FIG. 15 may end.

If the indication (e.g., the flag) indicates true, the apparatus may determine that the CU is in the Intra-TMP mode. The apparatus may parse an Intra TMP fusion indication (e.g., an intra TMP fusion flag). For example, the apparatus may check the intra TMP fusion indication (e.g., the intra TMP fusion flag) to determine whether the indication (e.g., the flag) is true or false. If the indication (e.g., the flag) indicates true, the apparatus may decode the intra TMP fusion index. For example, the intra TMP fusion index may indicate which intra TMP fusion candidate is used to predict the current CU (e.g., as described herein). The apparatus may parse the LIC indication (e.g., the LIC flag), and the process illustrated in FIG. 15 may end.

If the Intra TMP fusion indication (e.g., the Intra TMP fusion flag) is false, one or more of the following may apply. The Intra TMP index may indicate which block vector candidate in the sorted list of Intra TMP candidates (e.g., as described herein) is used to derive the block vector of the current CU.

The apparatus may parse a TMP FLM indication (e.g., a tmp_flm_flag) to determine if FLM is applied. The TMP FLM indication (e.g., the tmp_flm_flag) may indicate whether the FLM is applied. If the TMP FLM indication (e.g., the tmp_flm_flag) indicates true, the parsing process illustrated in FIG. 15 may end. If the TMP FLM indication (e.g., the tmp_flm_flag) indicates false, the apparatus may parse an TMP LIC indication (e.g., a tmp_lic flag) to determine whether to apply an LIC. For example, the TMP LIC indication (e.g., the tmp_lic flag) may indicate whether the LIC is applied. If the LIC is on (e.g., based on the TMP LIC indication, such as the tmp_lic flag) and if LIC adaptive template usage is allowed (e.g., referred to as an LIC extension illustrated in FIG. 15), the apparatus may parse a tmp_lic_idx. The tmp_lic_idx may indicate the top-only, left-only, or top-left template area used to derive one or more LIC model parameters. The apparatus may parse a tmp_frac_idx. The tmp_frac_idx may indicate if a fractional BV is used to predict the current CU. The tmp_frac_idx may indicate which subpel position is pointed to by the CU's BV.

The tmp_frac_idx may indicate if a fractional representation of the current CU's BV is used. The tmp frac_idx may be parsed. For example, the tmp frac_idx may be parsed after the intra TMP LIC mode is parsed. That is, the tmp_lic flag may be parsed first and fractional BV information may be parsed afterwards.

In some examples, the joint usage of IntraTMP-LIC mode and IntraTMP-fractional mode may not be beneficial in terms of compression efficiency for some content. Some statistical dependency may exist between the IntraTMP-LIC usage and the intraTMP fractional BV mode. In some examples, the usage of fractional BV mode may even decrease the compression performance on some video content.

In examples, the signaling of the tmp_frac_idx syntax element may employ some CABAC context that depends on the value of the tmp_lic flag syntax element. For example, the tmp_frac_idx may take a value (e.g., one value) in set {0,1}. The bin to indicate the value may employ a CABAC context (e.g., one CABAC context) if intraTMP LIC is deactivated (e.g., tmp_lic flag is false) and another CABAC context if intraTMP LIC is activated (e.g., tmp_lic flag is true).

In examples, the joint usage of Intra-TMP fractional mode and IntraTMP-LIC mode may be permitted. For example, the joint usage of Intra-TMP fractional mode and IntraTMP-LIC mode may be normatively activated through a high-level control. In some examples, disallowing the joint usage of the two modes may increase the compression performance on screen video content types or graphical contents.

A high-level indication (e.g., a high-level flag), e.g., at Sequence Parameter Set (SPS) level, may be used. For example, the SPS level indication (e.g., the SPS flag) may control the activating (e.g., enabling) of fractional intraTMP mode in case the IntraTMP-LIC mode is activated (e.g., on and/or enabled) for a given CU.

Additionally and/or alternatively, the joint usage of Intra-TMP fractional mode and Intra-TMP mode may be allowed if (e.g., when) the IntraTMP-LIC mode extension described herein (e.g., allowing adaptive template for LIC model derivation) is disallowed. The extended IntraTMP-LIC mode may be configured for (e.g., may be beneficial in case of) screen content coding. The joint usage of intraTMP fractional model and Intra-TMP LIC mode described herein may be configured (e.g., may be beneficial only in the case of) for camera-captured video coding (e.g., as opposed to the screen content coding).

If the extended Intra-TMP LIC mode is disallowed if (e.g., when) coding a given video sequence, the joint usage of intraTMP fractional and IntraTMP-LIC modes may be allowed. Additionally and/or alternatively, if (e.g., when) the extended Intra-TMP LIC mode is allowed when coding a given video sequence, the joint usage of intraTMP fractional and IntraTMP-LIC modes may be disallowed. Disallowing the joint usage of fractional intraTMP mode may be done at the encoder side (e.g., at the encoder side only) or may be normative. In the normative approach, the tmp_frac_idx syntax element may not be signaled and may be inferred to 0 by the decoder in case IntraTMP-LIC is one for the current CU.

In examples, the usage of intraTMP fractional BV mode may be disallowed (e.g., fully disallowed) if (e.g., when) coding non-camera-captured video content. For example, if (e.g., when) coding screen content and/or a graphical video content, the usage of intraTMP fractional BV mode may be disallowed. The usage of fractional block vector may be low (e.g., very low), if not null, if (e.g., when) screen content videos are compressed.

In examples, the IntraTMP-LIC mode extension as described herein may be configured to be activated or deactivated (e.g., enabled or disabled). Different CABAC contexts (e.g., 3 different CABAC contexts) may be used to signal the bin (e.g., binary symbol), e.g., indicating intraTMP fractional mode. One or more of the following rules may apply.

If, for the current CU, the IntraTMP-LIC mode is used (e.g., the IntraTMP-LIC flag is true) and the IntraTMP-LIC extended mode as described herein is allowed, e.g., at a slice, a picture, and/or a sequence level, a first CABAC context may be used to signal the use of intraTMP fractional BV mode for the current CU.

Otherwise, if the IntraTMP-LIC flag is true for the current CU, a second CABAC context may be used to signal the use of the intraTMP fractional BV mode for the current CU. Otherwise, if the IntraTMP-LIC flag is false for the current CU, a third CABAC context may be used to signal the use of the intraTMP fractional BV mode for the current CU.

The IntraTMP-LIC mode extension described herein may be allowed (e.g., allowed only), e.g., at a slice, a picture, and/or a sequence level, for screen content coding (e.g., or graphical video content coding). The joint usage of the IntraTMP-LIC mode and the IntraTMP-fractional mode may not be useful for the screen content coding. For example, it is statistically very likely that if the IntraTMP-LIC mode extension is allowed and the IntraTMP-LIC mode is on (e.g., is true) for the current CU, the IntraTMP-fractional mode may be skipped (e.g., may not be used) for the current CU. The statistical behavior (e.g., the singular statistical behavior) may be captured (e.g., configured) by the usage of a dedicated context as described herein.

In examples, the IntraTMP-LIC mode extension described herein may be activated or not (e.g., configured to be true or false, respectively). Different CABAC contexts (e.g., 3 different CABAC contexts) may be used to signal the bin indicating the intraTMP fractional mode. One or more of the following rules may apply.

If, for the current CU, the IntraTMP-LIC mode is used (e.g., the IntraTMP-LIC flag is true) and the IntraTMP-LIC extended mode described herein is allowed for the considered video sequence and is used for the current CU, a first CABAC context may be used to signal the use of the intraTMP fractional BV mode for the current CU. Otherwise, if the IntraTMP-LIC flag is true for the current CU, a second CABAC context may be used to signal the use of intraTMP fractional BV mode for the current CU. Otherwise, if the IntraTMP-LIC flag is false for the current CU, a third CABAC context may be used to signal the use of the IntraTM P fractional BV mode for the current CU.

The joint usage of the IntraTMP-LIC mode and the IntraTMP-fractional mode may not be useful for a screen content (e.g., a screen content coding). For example, it is statistically very likely that if intraTMP-LIC mode extension is allowed and the IntraTMP-LIC is on (e.g., is activated and/or is enabled) for the current CU, the IntraTMP-fractional mode may be skipped (e.g., may not be used) for the current CU. The statistical behavior (e.g., the singular statistical) may be captured (e.g., configured) by the usage of a dedicated context as described herein.

The following is a non-exhaustive list of embodiments that may or may not be claimed.

A device for video decoding may include a processor. The processor may be configured to perform one or more of the following.

In examples, the device may obtain, in video data, an intraTMP-LIC mode enabled (e.g., activated) indication.

The intraTMP-LIC mode enabled (e.g., activated) indication may be obtained using an SPS message. The intraTMP-LIC mode enabled (e.g., activated) indication may be configured to indicate whether an intraTMP-LIC mode is activated (e.g., enabled) to decode the slice, picture, and/or video sequence. Based on the determination that the intraTMP-LIC mode is activated (e.g., enabled), the device may skip parsing a fractional intraTMP mode enabled (e.g., activated) indication. The fractional intraTMP mode enabled (e.g., activated) indication may be configured to indicate whether a fractional intraTMP mode is activated (e.g., enabled) to decode the block. For example, based on the intraTMP-LIC mode enabled (e.g., activated) indication indicating that the intraTMP-LIC mode is activated (e.g., enabled), the device may deactivate (e.g., disable) the usage of the fractional intraTMP mode for the sequence of pictures associated with the SPS message (e.g., the blocks in the pictures associated with the sequence parameter set).

In examples, the device may obtain, in the video data, an intraTMP-LIC mode extension enabled (e.g., activated) indication. The intraTMP-LIC mode extension enabled (e.g., activated) indication may be configured to indicate whether an intraTMP-LIC mode extension is activated (e.g., enabled) to decode the slice, picture, and/or video sequence. Based on a determination that the intraTMP-LIC mode extension is deactivated (e.g., disabled), the device may allow the usage of the intraTMP fractional mode and the intraTMP-LIC mode to decode the block. For example, based on a determination that the intraTMP-LIC mode extension is deactivated (e.g., disabled), the device may parse the fractional intraTMP mode enabled (e.g., activated) indication and determine whether fractional intraTMP mode is activated (e.g., enabled).

In examples, the device may determine that the intraTMP-LIC mode extension is activated (e.g., enabled) based on the intraTMP-LIC mode extension activated (e.g., enabled) indication. Based on a determination that the intraTMP-LIC mode extension is activated (e.g., enabled), e.g., at the slice, picture, and/or video sequence level, the device may disallow the joint usage of the intraTMP LIC mode and the intraTMP fractional mode to decode the block as described herein. For example, based on a determination that the intraTMP-LIC mode extension is activated (e.g., enabled), the device may skip parsing the fractional intraTMP mode indication and infer that the fractional intraTMP mode is deactivated (e.g., disabled).

In examples, the device may determine that video content associated with the block is non-camera captured video content. Based on the determination that the video content associated with the block is the non-camera captured video content, the device may deactivate (e.g., disable) a fractional intraTMP mode to decode the block. For example, based on a determination that the video content associated with the block is the non-camera captured video content, the device may skip parsing the fractional intraTMP mode indication and infer that the fractional intraTMP mode indication to indicate that fractional intraTMP mode is deactivated (e.g., disabled).

A device for video encoding may include a processor. The processor may be configured to perform one or more of the following.

The device may deactivate (e.g., disable) the joint usage of the fractional intraTMP mode and the intraTMP-LIC mode to encode a block. In examples, the device may determine whether to use an intraTMP-LIC mode to encode a block. The device may include, in video data, an intraTMP-LIC mode activated indication (e.g., an intra-TMP-LIC mode enabled (e.g., activated) indication). For example, the device may include an intraTMP-LIC mode activated (e.g., enabled) indication using an SPS message. The intraTMP-LIC mode activated (e.g., enabled) indication may be configured to indicate whether an intraTMP-LIC mode is activated (e.g., enabled) to encode a block. Based on the determination to use the intraTMP-LIC mode to encode the block, the device may deactivate (e.g., disable) a fractional intraTMP mode. The device may skip encoding a fractional intraTMP mode activated (e.g., enabled) indication. The fractional intraTMP mode activated (e.g., enabled) indication, if included in video data, may be configured to indicate whether fractional intraTMP mode is used to encode the block.

In examples, the device may determine whether to use an intraTMP-LIC mode extension to encode the block. The device may include, in the video data, an intraTMP-LIC mode extension activated (e.g., enabled) indication. The intraTMP-LIC mode extension activated (e.g., enabled) indication may be configured to indicate whether an intraTMP-LIC mode extension is activated (e.g., enabled) to encode the block(s) of a slice, picture, and/or a sequence. Based on a determination that the intraTMP-LIC mode extension is deactivated (e.g., disabled) for the block, the device may allow the joint usage of fractional intraTMP mode and the intraTMP-LIC mode to encode the block. For example, the device may include, in video data, a fractional intraTMP mode activated (e.g., enabled) indication. The fractional intraTMP mode activated (e.g., enabled) indication may be configured to indicate whether fractional intraTMP mode is used to encode the block.

In examples, the device may determine that the intraTMP-LIC mode extension is used to encode the block, the device may disallow the joint usage of the fractional intraTMP mode and the intraTMP-LIC mode to encode the block as described herein. Based on the determination to use the intraTMP-LIC mode extension to encode the block, the device may deactivate (e.g., disable) a fractional intraTMP mode. The device may skip encoding a fractional intraTMP mode activated (e.g., enabled) indication.

In examples, the device may determine that video content associated with the block is non-camera captured video content. Based on the determination that the video content associated with the block is the non-camera captured video content, the device may deactivate (e.g., disable) a fractional intraTMP mode to encode the block and may skip encoding a fractional intraTMP mode activated (e.g., enabled) indication.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. Video data (e.g., a bitstream) that may include one or more of the described syntax elements, or variations thereof, whether transmitted, stored, or otherwise made available.

    iii. Creating, transmitting, receiving, and/or decoding of the bitstream.

    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A device for video decoding, the device comprising:
   a processor configured to:

   obtain, in video data, an intra template matching prediction (TMP)-local illumination compensation (LIC) mode activated indication that is configured to indicate whether an intraTMP-LIC mode is activated for a block;
   based on the obtained intraTMP-LIC mode activated indication, obtain a context-adaptive binary arithmetic coding (CABAC) context for a fractional template matching indication associated with the block; and
   decode the fractional template matching indication associated with the block based on the CABAC context for the fractional template matching indication.

2. The device of claim 1, wherein the processor is configured to:

based on the obtained intraTMP-LIC mode activated indication indicating that the intraTMP-LIC mode is activated for the block, use a first CABAC context for decoding the fractional template matching indication associated with the block; and

based on the obtained intraTMP-LIC mode activated indication indicating that the intraTMP-LIC mode is deactivated for the block, use a second CABAC context for decoding the fractional template matching indication associated with the block.

3. The device of any one of claims 1 or 2, wherein the processor is configured to:
determine whether an intraTMP-LIC mode extension is activated for a slice associated with the block, wherein the CABAC context for the fractional template matching indication associated with the block is determined further based on whether the intraTMP-LIC mode extension is activated.

4. The device of claim 1, wherein the processor is configured to:

determine, based on the obtained intraTMP-LIC mode activated indication, that the intraTMP-LIC mode is activated for the block;
determine whether an intraTMP-LIC mode extension is activated for a slice associated with the block, wherein based on the determination that the intraTMP-LIC mode is activated for the block and that the intraTMP-LIC mode extension is activated, a first CABAC context is obtained for decoding the fractional template matching indication associated with the block, and wherein based on the determination that the intraTMP-LIC mode is activated for the block and that the intraTMP-LIC mode extension is deactivated, a second CABAC context is obtained for decoding the fractional template matching indication associated with the block.

5. The device of claim 1, wherein the processor is configured to:

determine whether an intraTMP-LIC mode extension is activated for a slice associated with the block;
determine, based on the obtained intraTMP-LIC mode activated indication, whether the intraTMP-LIC mode is activated for the block, wherein:

based on the determination that the intraTMP-LIC mode is activated for the block and that the intraTMP-LIC mode extension is activated, a first CABAC context is obtained for decoding the fractional template matching indication associated with the block,
based on the determination that the intraTMP-LIC mode is activated for the block and that the intraTMP-LIC mode extension is deactivated, a second CABAC context is obtained for decoding the fractional template matching indication associated with the block; and
based on the determination that the intraTMP-LIC mode is deactivated for the block, a third CABAC context is obtained for decoding the fractional template matching indication associated with the block.

6. The device of any one of claims 1-5, wherein the processor is configured to:
decode the fractional template matching indication associated with the block based on the obtained CABAC context for the fractional template matching indication, wherein the block is decoded based on the decoded fractional template matching indication.

7. The device of any one of claims 1-6, wherein the fractional template matching indication is configured to indicate whether an intraTMP fractional block vector (BV) mode is used to decode the block.

8. A device for video encoding, the device comprising:
a processor configured to:

determine whether to activate an intra template matching prediction (TMP)-local illumination compensation (LIC) mode for a block;
based on the determination of whether to activate the intraTMP-LIC mode for the block, determine a context-adaptive binary arithmetic coding (CABAC) context for a fractional template matching indication associated with the block; and
encode the fractional template matching indication associated with the block based on the CABAC context for the fractional template matching indication.

9. The device of claim 8, wherein the processor is configured to:

based on the determination to activate the intraTMP-LIC mode for the block, use a first CABAC context for encoding the fractional template matching indication associated with the block; and
based on the determination to deactivate the intraTMP-LIC mode for the block, use a second CABAC context for encoding the fractional template matching indication associated with the block.

10. The device of any one of claims 8 or 9, wherein the processor is configured to:
determine whether an intraTMP-LIC mode extension is activated for a slice associated with the block, wherein the CABAC context for the fractional template matching indication associated with the block is determined further based on whether the intraTMP-LIC mode extension is activated.

11. The device of claim 8, wherein the processor is configured to:
determine whether to activate an intraTMP-LIC mode extension for a slice associated with the block, wherein:

based on determination to activate the intraTMP-LIC mode to encode the block and based on a determination to activate the intraTMP-LIC mode extension, a first CABAC context is obtained for encoding the fractional template matching indication associated with the block;
based on determination to activate the intraTMP-LIC mode and based on a determination to deactivate the intraTMP-LIC mode extension, a second CABAC context is obtained for encoding the fractional template matching indication associated with the block; and
based on determination to deactivate the intraTMP-LIC mode, a third CABAC context is obtained for encoding the fractional template matching indication associated with the block.

12. A method for video decoding, the method comprising:

obtaining, in video data, an intra template matching prediction (TMP)-local illumination compensation (LIC) mode activated indication that is configured to indicate whether an intraTMP-LIC mode is activated for a block;
based on the obtained intraTMP-LIC mode activated indication, obtaining a context-adaptive binary arithmetic coding (CABAC) context for a fractional template matching indication associated with the block; and
decoding the fractional template matching indication associated with the block based on the CABAC context for the fractional template matching indication.

13. The method of claim 12, wherein the method comprises:

determining whether an intraTMP-LIC mode extension is activated for decoding a slice associated with the block;
determining, based on the obtained intraTMP-LIC mode activated indication, whether the intraTMP-LIC mode is activated for the block, wherein:

based on the determining that the intraTMP-LIC mode is activated for the block and that the intraTMP-LIC mode extension is activated, a first CABAC context is obtained for decoding the fractional template matching indication associated with the block,
based on the determining that the intraTMP-LIC mode is activated for the block and that the intraTMP-LIC mode extension is deactivated, a second CABAC context is obtained for decoding the fractional template matching indication associated with the block, and
based on the determining that the intraTMP-LIC mode is deactivated for the block, a third CABAC context is obtained for decoding the fractional template matching indication associated with the block.

14. A method for video encoding, the method comprising:

determining whether to activate an intra template matching prediction (TMP)-local illumination compensation (LIC) mode for a block;
based on the determination of whether to activate the intraTMP-LIC mode for the block, determining a context-adaptive binary arithmetic coding (CABAC) context for a fractional template matching indication associated with the block; and
encoding the fractional template matching indication associated with the block based on the CABAC context for the fractional template matching indication

15. The method of claim 14, wherein the method comprises:
determining whether to activate an intraTMP-LIC mode extension for encoding a slice associated with the block, wherein:

based on determining to activate the intraTMP-LIC mode and based on determining to activate the intraTMP-LIC mode extension, a first CABAC context is used for encoding the fractional template matching indication associated with the block;
based on determining to activate the intraTMP-LIC mode and based on determining to deactivate the intraTMP-LIC mode extension, a second CABAC context is used for encoding the fractional template matching indication associated with the block; and
based on determining to deactivate the intraTMP-LIC mode, a third CABAC context is used for encoding the fractional template matching indication associated with the block.

**FIG. 1**

**FIG. 2**

EP 4 730 768 A1

EP 4 730 768 A1

CODED VIDEO
BITSTREAM → | ENTROPY DECODER | 330 → | IMAGE PARTITIONER | 335 → | INVERSE QUANTIZER | 340 → | INVERSE TRANSFORMER | 350

RECONSTRUCTED
RESIDUAL BLOCKS

| PREDICTION ENHANCER | 390 → PREDICTION BLOCKS → (+) 355

RECONSTRUCTED
BLOCKS

370

| INTRA PREDICTOR | 360

| MOTION COMPENSATOR | 375

| REFERENCE PICTURE BUFFER | 380

| IN-LOOP FILTERS | 365 → RECONSTRUCTED VIDEO

300

# FIG. 3

FIG. 4

Proposed candidates

Reconstructed Region

Reference Region

IBC Buffer

Current Block

**FIG. 5**

FIG. 6

**FIG. 7**

FIG. 8

FIG. 9

CU to parse

Parse prediction mode *predMode*

*predMode* is Intra ? — *no* →

↓ *yes*

Parse Intra TMP flag

Intra prediction mode is
Intra TMP ? — *no* →

↓ *yes*

Parse LIC flag

LIC flag is on ? — *no* →

↓ *yes*

Parse FLM mode

END

**FIG. 10**

EP 4 730 768 A1

CU to decode in intra TMP mode

Perform Intra TMP search for a prediction block

Predict current block with found block vector

LIC flag is on ? — *no* → LFM is on ? — *no*

*yes*

Determine LIC parameters $(a, b)$ based on template

Determine LFM taps based on template

*yes*

Compute final predicted block:
$$pred_{Final} = a \times pred_{IntraTMP} + b$$

Apply LFM $\rightarrow pred_{Final}$

*yes*

Decode CU residual

Reconstruct CU by suming predicted and resisudal CU

END

**FIG. 11**

CU to code in
Intra TMP
mode

Evalutate Intra TMP coding of
current CU in usual Intra TMP
mode: $RD_{cost}(ITMP)$

Evalutate Intra TMP coding of
current CU in Intra TMP with
LIC: $RD_{cost}(ITMP, LIC)$

Evalutate Intra TMP coding of
current CU in Intra TMP with
LFM: $RD_{cost}(ITMP, LFM)$

Select Intra TMP coding mode
with minimum RD cost

END

**FIG. 12**

**FIG. 13**

EP 4 730 768 A1

**FIG. 14**

Intra CU to parse

Parse Intra TMP flag

Intra TMP is on ? — *no* →

*yes*

Parse Intra TMP fusion flag

Itmp fusion is on ? — *yes* → Parse tmp_fusion_idx

*no*

Parse tmp_idx

Parse tmp_lic flag

Parse tmp_flm flag

Parse tmp_lic flag ← *no* — Itmp FLM is on ?

*yes*

Itmp LIC extension allowed?

*yes*

Parse tmp_lic_idx

*no*

Parse tmp_frac_idx

END

# FIG. 15

Europäisches Patentamt

European Patent Office

Office européen des brevets

# EUROPEAN SEARCH REPORT

**Application Number**

EP 24 30 6731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/297987 A1 (CHEN CHUN-CHI [US] ET AL) 5 September 2024 (2024-09-05) | 1,3,6-8, 10,12,14 | INV. H04N19/105 |
| A | * abstract *<br>* paragraphs [0005], [0075], [0082], [0083], [0141], [0214] - [0215], [0223], [0229] *<br>* fractional IntraTMP.;<br>claim 1 * | 2,4,5,9, 11,13,15 | H04N19/11<br>H04N19/13<br>H04N19/157<br>H04N19/159<br>H04N19/174<br>H04N19/176<br>H04N19/463 |
| A | SEREGIN V ET AL: "EE2: Summary report of exploration experiment on enhanced compression beyond VVC capability", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ),<br>,<br>no. JVET-AG0024<br>17 January 2024 (2024-01-17), XP030313838,<br>Retrieved from the Internet:<br>URL:https://jvet-experts.org/doc_end_user/documents/33_Teleconference/wg11/JVET-AG0024-v1.zip JVET-AG0024-v1.docx<br>[retrieved on 2024-01-17]<br>* section "Test 1.5: IntraTMP extension to LIC (JVET-AG0136)", page 13 * | 1-15 | H04N19/593<br>H04N19/70<br>H04N19/91 |

**TECHNICAL FIELDS SEARCHED (IPC)**

H04N

The present search report has been drawn up for all claims

| Place of search | Date of completion of the search | Examiner |
|---|---|---|
| Munich | 7 February 2025 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6731

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | Publication date | Patent family member(s) | Publication date |
|---|---|---|---|
| US 2024297987 A1 | 05-09-2024 | NONE | |

For more details about this annex : see Official Journal of the European Patent Office, No. 12/82

EPO FORM P0459